(19) Europäisches Patentamt
European Patent Office
Office européen des brevets

(11) EP 2 785 786 B1

(12) # EUROPEAN PATENT SPECIFICATION

(45) Date of publication and mention of the grant of the patent:
**30.05.2018 Bulletin 2018/22**

(21) Application number: **12791805.0**

(22) Date of filing: **30.11.2012**

(51) Int Cl.:
***C08L 23/08*** (2006.01) ***C08J 5/18*** (2006.01)

(86) International application number:
**PCT/EP2012/074076**

(87) International publication number:
**WO 2013/079654 (06.06.2013 Gazette 2013/23)**

(54) **POLYMER BLENDS**

POLYMERMISCHUNGEN

MÉLANGES DE POLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2011 EP 11191511**

(43) Date of publication of application:
**08.10.2014 Bulletin 2014/41**

(73) Proprietor: **Ineos Europe AG**
**1180 Rolle (Vaud) (CH)**

(72) Inventors:
- **CHAI, Choon Kooi**
  **B-3090 Overijse (BE)**
- **JAN, Dominique**
  **B-4052 Beaufays (BE)**

(74) Representative: **Hawkins, David George**
**Mathisen & Macara LLP**
**Communications House**
**South Street**
**Staines-upon-Thames, Middx TW18 4PR (GB)**

(56) References cited:
**EP-A1- 0 095 253**
**EP-A1- 0 676 421**
**WO-A1-2005/002744**
**WO-A1-2005/019333**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 785 786 B1

Printed by Jouve, 75001 PARIS (FR)

## Description

The present invention relates to polymer blends and in particular to polymer blends comprising ethylene - alpha-olefin copolymers and low density polyethylenes. The copolymers may typically be produced using metallocene catalysts and the polymer blends exhibit high melt strength and are particularly suitable for film applications.

There are a number of different types of known polymers which may suitable be divided by means of their density. For example traditional Ziegler-Nattta catalysts have been used to prepare linear low density polyethylenes (LLDPE's) having densities in a typical range of 0.915 to 0.928 g $cm^{-3}$. Medium density polyethylenes with typical densities in the range 0.929 to 0.940 g $cm^{-3}$ and high density polyethylenes with densities greater than 0.940 g $cm^{-3}$ are also well known. Since the mid-90's, linear low density polyethylenes (LLDPE's) have also been produced with densities below 0.915 g $cm^{-3}$.

The linear low density polyethylenes (LLDPE's) have more recently been prepared by use of single site catalyst systems and in particular by use of metallocene catalyst systems. Our earlier publications WO 97/44371, WO 00/68285, WO 06/085051 and WO 08/074689 describe the preparation of high performance linear low density copolymers prepared by use of monocyclopentadienyl metallocene complexes. The polymers have been found to exhibit good processing characteristics and to be particularly suitable for use in the preparation of films such as blown films having improved mechanical and optical properties.

The processing behaviour of a polyethylene product is typically characterised by (i) the extrudability behaviour of the polymer melt within the extruder, in particular through the extrusion die, and (ii) the behaviour of the extrudates under the post-extruder processes associated with the various polymer processing applications (e.g., in open surface processes like film blowing, extrusion coating, fibre spinning, etc.).

The extrudability characteristics can be evaluated by, for example, the ease of extrusion of the polyethylene composition that makes possible to reduce energy consumption at given output rate (Q) or to increase machine output at a given energy consumption. For example, this extrusion energy consumption can be characterised broadly by an Energy Index (EI) defined by some of the key extrusion parameters:

$$\text{Energy Index } (\mathbf{EI}) = [\text{Screw Speed } (\mathbf{S}) \text{ x Motor Load } (\mathbf{A})]/[\text{Output Rate } (\mathbf{Q})],$$

where Screw Speed in unit of revolutions per minute (rpm), Motor Load in current Ampere (A) and Output rate in kilograms per hour (kg/h).

Hence, it is expected that materials with lower viscosity at polymer extrusion rates (typically at shear rates of the order 500 $s^{-1}$ for film blowing process) will have lower Energy Index, i.e., a better extrudability, lower motor load and lower melt-pressure. The required processing rheology can often be achieved by reducing the average molecular weight (i.e. increasing melt-index) of the polymer, or increasing the breadth of its molecular weight distribution, or the presence of long chain branching, or the combination of the above polymer molecular structure and properties.

On the other side, the post-extruder processability is often characterised as the ability and stability of the extrudate in forming the desired product geometry, thickness and size, etc., under a given processing equipment and conditions. For example, in the case of blown film extrusion processes, the bubble stability is a key attribute that makes possible to achieve large diameter bubbles, and/or thinner film thickness, without surface imperfections (e.g., no sharkskin and/or melt fracture), at highest possible output rates. It is commonly observed that a better bubble stability is obtained with compositions having specific rheological features, particularly higher melt strength and extensional rheological properties (e.g., strain hardening). An increase in high molecular weight fraction (by reducing the melt-index or increasing the breadth of the molecular weight distribution, for instance) and/or the presence of long chain branching in the polyethylene compositions results in higher melt strength, hence better bubble stability.

Methods have been developed in order to improve the processing of such LLDPEs for film applications. However such improvements in extrudability or processability are often accompanied by a reduction in mechanical properties in particular with respect to film applications. In addition, variations in the molecular structure of the polyethylene to improve the extrudability may have a detrimental effect on the bubble stability; for instance, an increase in melt-index will have a positive impact on the extrudability as the polymer will be more fluid, but the bubble stability during a blown film extrusion will also be badly affected (i.e., lower melt-strength at higher melt-index).

LLDPEs containing long chain branching have been developed to improve the balance of processability and mechanical properties. For example WO 2009/109367describes polymers prepared by use of bridged bis-indenyl zirconocene complexes in the gas phase and are defined in terms of melt index ratio, $I_{21}/I_2$ > 35 indicative of the presence of long chain branching.

For some applications LLDPEs have been blended with other polymers such as low density polyethylenes (LDPEs). One such application is extrusion coating and our earlier publication WO 05/001933 describes blends based

on high performance linear low density copolymers with LDPEs. Polymer blends having at least 25% of the LDPE component are reported.

EP 1081166 describes blends of 60 - 95 wt% ethylene -alpha-olefin copolymer and 5 - 40 wt% of a LDPE. The copolymers typically have a density in the range 0.910 - 0.930 g $cm^{-3}$ and a melt index in the range 0.3 - 5 g/10 mins. The LDPE component of the blends typically has densities in the range 0.922 - 0.924 g $cm^{-3}$.

WO 00/68285 describes LLDPE copolymers having a unique combination of properties in particular a narrow molecular weight distribution ($M_w/M_n$) in the range 2 to 3.4 and an activation energy in the range 28 to 45 kJ/mol. These copolymers may be produced in the gas phase using metallocene catalysts and the reference discloses generally that the copolymers may be blended with other polymer components such as low density polyethylenes (LDPE).

WO 00/09594 describes blends of LLDPEs and LDPEs for high clarity polyethylene compositions in which the LDPE component is present in very low amounts ($\leq$ 3 wt%). The improvements are directed to optical properties at these very low amounts of LDPE however there are no indications with respect to processability and extrudability.

US 2002/0143123A1 describes "substantially non-blended" or "substantially unblended" LLDPEs, having a melt index ratio $I_{21}/I_2$ (MIR $\equiv$ HLMI/$MI_2$) in the range of from 40 - 90 at an MI of 0.7 g/10 min, as embodiments of having less than 10 wt%, or less than 5 wt%, or less than 3 wt%, or 0 wt% of a separate, branched polymer, for example, LDPE, wherein the said copolymer has a melt strength (MS) in the range of from 5 - 20 cN.

EP0095253A1 describes blends of LLDPEs and LDPEs for improved and good mechanical properties in which the high pressure polymer having a melt index greater than 6 and not greater than 20, and a melt index ratio $I_{21}/I_2$ (MIR $\equiv$ HLMI/$MI_2$) below 50.0. However, there are no indications with respect to the melt elasticity and melt strength characteristics of the high pressure polymer that are novel in the invention.

For extrusion coating applications, EP1777238B describes blends of an olefin polymer prepared in the presence of a transition metal catalyst with 5 - 40 wt% LDPEs having a melt index ($MI_2$) in the range 2.5 - 10, where the rheological properties of the latter are characterised by very high molecular weight averages ($M_w$ = 400 - 600 kg/mol, and $M_z$ = 2000 - 4000 kg/mol) and very broad molecular weight distribution (polydispersity index $M_w/M_n$ in the range 20 - 50) measured by classical Size Exclusion Chromatography (SEC), or classical Gel Permeation Chromatography (GPC), with conventional calibration method using narrow molecular weight linear polystyrene standards.

There is still however a demand for polymers having an improved balance of properties - processability/mechanical/extrudability - in particular for film applications.

We have now surprisingly found that polymer blends may be prepared based on LLDPE's and LDPE's wherein the LDPE's are present in low amounts compared with previous known blends. The LLDPE's have a narrow molecular weight distribution but which have unique melt index and melt rheological properties thus leading to improved blends in particular for high performance film applications.

Thus according to a first aspect of the present invention there is provided a polymer blend comprising

(a) 90 - 97% by weight of a copolymer of ethylene and an alpha olefin having from 3 to 10 carbon atoms, said copolymer having

(i) a density in the range 0.910 to 0.940 g $cm^{-3}$,
(ii) a melt index (190°C/2.16 kg), $MI_2$ < 5 g/10min, and
(iii) molecular weight distribution ($M_{w\text{-}cc}/M_{n\text{-}cc}$, by classical GPC) in the range 2.0 - 5.0, and

(b) from 3 - 10% by weight of a low density polyethylene polymer having

(i) a density from 0.910 to 0.920 g $cm^{-3}$ and
(ii) a melt index (190°C/2.16 kg), $MI_2$ in the range 3 to 6 g/10min, and
(iii) a melt elastic modulus G'(G"= 500 Pa) in the range 150-185 Pa at 190°C, wherein the sum of (a) and (b) is 100%.

The copolymers of component (a) of the polymer blends of the present invention preferably have density in the range 0.912 - 0.935 g $cm^{-3}$, more preferably in the range 0.915 - 0.935 g $cm^{-3}$ and most preferably in the range 0.916 - 0.926 g $cm^{-3}$.

The copolymers of component (a) preferably have a melt elastic modulus G' (G" = 500 Pa) at 190°C in the range 25 - 70 Pa, and most preferably in the range 30 - 70 Pa.

The copolymers of component (a) preferably have a melt index (190°C/2.16 kg), $MI_2$ in the range 0.1 - 4.0 g/10min, and most preferably in the range 0.5 - 3.0 g/10min.

The copolymers of component (a) have a melt index ratio $I_{21}/I_2$ (MIR $\equiv$ HLMI/$MI_2$) less than 35, and preferably more than 15, and more preferably in the range of 18 - 25, and most preferably in the range 19 - 23.

The copolymers of component (a) preferably have a molecular weight distribution ($M_{w\text{-}cc}/M_{n\text{-}cc}$, by classical

GPC) in the range 2.0 - 4.2, more preferably in the range 3.0 - 4.2 and most preferably in the range 3.0 - 4.0.

The copolymers of component (a) typically exhibit a flow activation energy (Ea) at 190°C in the range 28 - 45 kJ/mol, more preferably in the range 30 - 40 kJ/mol and most preferably in the 30 - 35 kJ/mol.

The copolymers of component (a) typically exhibit a Branching Index (by SEC/MALLS), or Branching Contraction Factor, **g** < 1, preferably in the range 0.80 - 0.92.

The copolymers of component (a) typically exhibit a Branching Index which has been empirically corrected for short chain branching effect, $\mathbf{g}_{corrected}$ < 1, or an equivalent Long Chain Branching Contraction Factor, $\mathbf{g}_{LCB}$ < 1, both preferably in the range 0.80 - 0.99 and most preferably in the range 0.84 - 0.99.

The copolymers of component (a) of the blends exhibit melt strength pressure derivatives at 190°C, $\delta(\mathbf{MS})/\delta\mathbf{P}$, in the range 0.10 to 0.45 and preferably in the range 0.15 to 0.25 cN/MPa, wherein MS is the melt strength of the copolymer in cN and P is the extrusion pressure of the copolymer in MPa.

The copolymers of component (a) of the blends also exhibit a melt strength shear rate derivative at 190°C, $\delta(\mathbf{MS})/\delta(\log \dot{\gamma})$ in the range 1.5 - 6.0 cN and most preferably in the range 2.5 - 5.0 cN, wherein MS is the melt strength of the copolymer in cN and $\dot{\gamma}$ is the capillary shear rate of the copolymer in $s^{-1}$.

The LDPE component (b) of the polymer blends preferably has a density in the range 0.912 - 0.918 g $cm^{-3}$, and most preferably in the range 0.914 to 0.918 g $cm^{-3}$.

The LDPE component (b) has a melt index (190°C/2.16 kg), $MI_2$ in the range 3 - 6 g/10min

The LDPE component (b) preferably has a high load melt index (190°C/2.16 kg), (HLMI) in the range 80 - 160, more probably in the range 100 - 160, and most preferably in the range 130 - 160 g/10min.

The LDPE component (b) preferably has a melt index ratio, $I_{21}/I_2$ ($MIR \equiv HLMI/MI_2$), at 190°C in the range 35 - 54, and most preferably in the range 35 - 45.

The LDPE component (b) preferably has a molecular weight distribution ($M_{w-cc}/M_{n-cc}$, by classical GPC) in the range 5 - 15, more preferably in the range 7 - 14.

The LDPE component (b) has a melt elastic modulus G' (G"= 500 Pa) at 190°C in the range 150 - 185 Pa.

The LDPE component (b) typically exhibit a flow activation energy (Ea) at 190°C in the range 40 - 60 kJ/mol, more preferably in the range 40 - 55 kJ/mol and most preferably in the 45 - 55 kJ/mol.

The LDPE component (b) preferably has a melt strength at shear rate of 100 $s^{-1}$, **MS**(100 $s^{-1}$) at 190°C of ≥ 10 cN, more preferably of ≥ 12 cN and most preferably in the range 12 - 20 cN.

The LDPE component of the blends of the present invention preferably has a weight-average molecular weight ratio, $M_{w-LS}$ /$M_{w-calib}$ > 2.5 and more preferably greater than 3.

$M_{w-LS}/M_{w-calib}$ represents the weight-average molecular weight ratio determined by use of SEC/MALLS, full details of which are provided in the experimental section.

The novel polymer blends of the present invention preferably comprise 92 - 97 % by weight of component (a) and 3 - 8% by weight of component (b), more preferably comprise 93 - 96 % by weight of component (a) and 4 - 7% by weight of component (b).

The blends of the present invention comprise features of the individual components (a) and (b) to provide the technical advantages of excellent processing and extrusion behaviour without jeopardizing the mechanical properties of resultant films.

Thus according to the present invention there is provided polymer blends as described hereinbefore wherein component (a) has a melt strength pressure derivative at 190°C $\delta(MS)/\delta P$ in the range 0.10 to 0.45 and component (b) has a melt strength at shear rate of 100 $s^{-1}$, **MS**(100 $s^{-1}$) at 190°C of ≥ 10 cN.

The blends also comprise those wherein component (a) has a Long Chain Branching Contraction Factor, $\mathbf{g}_{LCB}$ < 1 and component (b) has a weight-average molecular weight ratio, $M_{w-LS}$ /$M_{w-calib}$ > 2.5.

The blends also comprise those wherein component (a) has a melt index ratio $I_{21}/I_2$ less than 35 and component (b) has a High Load Melt Index, HLMI (190°C/21.6 kg) in the range 80 - 160.

The blends also comprise those wherein component (a) has a molecular weight distribution ($M_{w-cc}/M_{n-cc}$, by classical GPC) in the range 2.0 to 4.2 and component (b) has a molecular weight distribution ($M_{w-cc}/M_{n-cc}$, by classical GPC) in the range 5 - 15.

The copolymers of component (a) of the present invention may typically be prepared by use of catalyst systems comprising transition metal compounds. The transition metal compounds may be used in the presence of a suitable cocatalyst and may be supported.

The copolymers of component (a) are most preferably prepared by use of metallocene catalyst systems.

A preferred catalyst system for making the polyethylene copolymers utilised in the invention is a metallocene catalyst system comprising a monocyclopentadienyl metallocene complex having a 'constrained geometry' configuration together with a suitable activator. Examples of such monocyclopentadienyl or substituted monocyclopentadienyl complexes are described in EP 416815A, EP 418044A, EP 420436A and EP 551277A. This type of catalyst system is known to exhibit high activity and to give relatively low catalyst residues in the final resin.

Particularly suitable monocyclopentadienyl or substituted monocyclopentadienyl complexes may be represented by the general formula $CpMX_n$ wherein Cp is a single cyclopentadienyl or substituted cyclopentadienyl group optionally covalently bonded to M through a substituent, M is a Group IVB metal bound in a $\eta^5$ bonding mode to the cyclopentadienyl or substituted cyclopentadienyl group, X each occurrence is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms or optionally one X together with Cp forms a metallocycle with M and n is dependent upon the valency of the metal.

Preferred monocyclopentadienyl complexes have the formula:

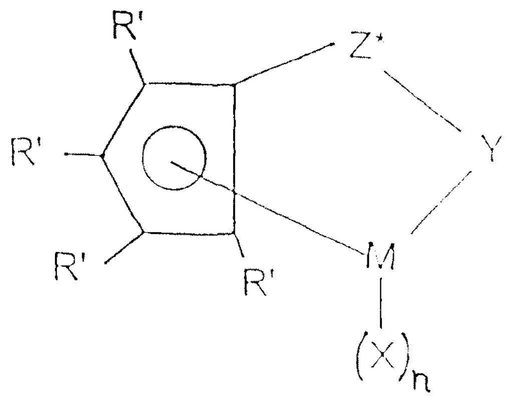

wherein:-

R' in each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;

X is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms,

Y is -O-, -S-, -NR*-, -PR*-,

M is hafnium, titanium or zirconium,

Z* is $SiR^*_2$, $CR^*_2$, $SiR^*_2SiR^*_2$, $CR^*_2CR^*_2$, CR*=CR*, $CR^*_2SiR^*_2$, or $GeR^*_2$, wherein:

R* each occurrence is independently hydrogen, or a member selected from hydrocarbyl, silyl, halogenated alkyl, halogenated aryl, and combinations thereof, said

R* having up to 10 non-hydrogen atoms, and optionally, two R* groups from Z* (when R* is not hydrogen), or an R* group from Z* and an R* group from Y form a ring system.,

and n is 1 or 2 depending on the valence of M.

Examples of suitable monocyclopentadienyl complexes are (tert-butylamido) dimethyl (tetramethyl-$\eta^5$- cyclopentadienyl) silanetitanium dichloride and (2-methoxyphenylamido) dimethyl (tetramethyl--$\eta^5$- cyclopentadienyl) silanetitanium dichloride.

Particularly preferred metallocene complexes for use in the preparation of the copolymers of the present invention may be represented by the general formula:

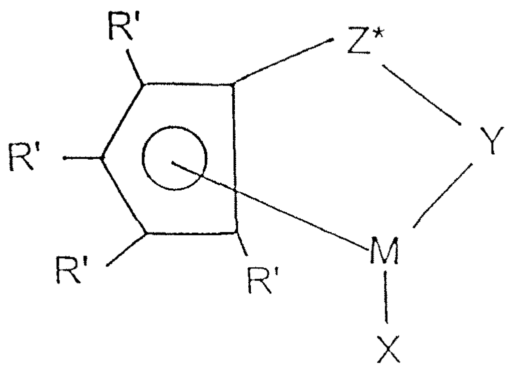

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is a neutral $\eta^4$ bonded diene group having up to 30 non-hydrogen atoms, which forms a $\pi$-complex with M;
Y is -O-, -S-, -NR*-, -PR*-,
M is titanium or zirconium in the + 2 formal oxidation state;
Z* is $SiR^*_2$, $CR^*_2$, $SiR^*_2SiR^*_2$, $CR^*_2CR^*_2$, CR*=CR*, $CR^*_2SiR^*_2$, or $GeR^*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system.

Examples of suitable X groups include s-trans-$\eta^4$-1,4-diphenyl-1,3-butadiene, s-trans-$\eta^4$-3-methyl-1,3-pentadiene; s-trans-$\eta^4$-2,4-hexadiene; s-trans-$\eta^4$-1,3-pentadiene; s-trans-$\eta^4$-1,4-ditolyl-1,3-butadiene; s-trans-$\eta^4$-1,4-bis(trimethylsilyl)-1,3-butadiene; s-cis-$\eta^4$-3-methyl-1,3-pentadiene; s-cis-$\eta^4$-1,4-dibenzyl-1,3-butadiene; s-cis-$\eta^4$-1,3-pentadiene; s-cis-$\eta^4$-1,4-bis(trimethylsilyl)-1,3-butadiene, said s-cis diene group forming a $\pi$-complex as defined herein with the metal.
Most preferably R' is hydrogen, methyl, ethyl, propyl, butyl, pentyl, hexyl, benzyl, or phenyl or 2 R' groups (except hydrogen) are linked together, the entire
$C_5R'_4$ group thereby being, for example, an indenyl, tetrahydroindenyl, fluorenyl, terahydrofluorenyl, or octahydrofluorenyl group.
Highly preferred Y groups are nitrogen or phosphorus containing groups containing a group corresponding to the formula -N(R")- or -P(R")- wherein R"is $C_{1-10}$ hydrocarbyl.
Most preferred complexes are amidosilane - or amidoalkanediyl complexes.
Most preferred complexes are those wherein M is titanium.
Specific complexes which may be used are those disclosed in WO 95/00526 and these are incorporated herein by reference. A particularly preferred complex is (t-butylamido) (tetramethyl-$\eta^5$-cyclopentadienyl) dimethyl silanetitanium -$\eta^4$-1.3 - pentadiene.
Suitable cocatalysts for use in the preparation of the novel copolymers of the present invention are those typically used with the aforementioned metallocene complexes. These include aluminoxanes such as methyl aluminoxane (MAO), boranes such as tris(pentafluorophenyl) borane and borates.
Aluminoxanes are well known in the art and preferably comprise oligomeric linear and/or cyclic alkyl aluminoxanes. Aluminoxanes may be prepared in a number of ways and preferably are prepare by contacting water and a trialkylaluminium compound, for example trimethylaluminium, in a suitable organic medium such as benzene or an aliphatic hydrocarbon. A preferred aluminoxane is methyl aluminoxane (MAO).
Other suitable cocatalysts are organoboron compounds in particular triarylboron compounds. A particularly preferred triarylboron compound is tris(pentafluorophenyl) borane.
Other compounds suitable as cocatalysts are compounds which comprise a cation and an anion. The cation is typically a Bronsted acid capable of donating a proton and the anion is typically a compatible non-coordinating bulky species capable of stabilizing the cation.

Such cocatalysts may be represented by the formula:

$$(L^*\text{-}H)^+_d\ (A^{d-})$$

wherein:-

L* is a neutral Lewis base
$(L^*\text{-}H)^+_d$ is a Bronsted acid
$A^{d-}$ is a non-coordinating compatible anion having a charge of d-, and
d is an integer from 1 to 3.

The cation of the ionic compound may be selected from the group consisting of acidic cations, carbonium cations, silylium cations, oxonium cations, organometallic cations and cationic oxidizing agents.

Suitably preferred cations include trihydrocarbyl substituted ammonium cations eg. triethylammonium, tripropylammonium, tri(n-butyl)ammonium and similar. Also suitable are N.N-dialkylanilinium cations such as N,N-dimethylanilinium cations.

The preferred ionic compounds used as cocatalysts are those wherein the cation of the ionic compound comprises a hydrocarbyl substituted ammonium salt and the anion comprises an aryl substituted borate.

Typical borates suitable as ionic compounds include:

triethylammonium tetraphenylborate
triethylammonium tetraphenylborate,
tripropylammonium tetraphenylborate,
tri(n-butyl)ammonium tetraphenylborate,
tri(t-butyl)ammonium tetraphenylborate,
N,N-dimethylanilinium tetraphenylborate,
N,N-diethylanilinium tetraphenylborate,
trimethylammonium tetrakis(pentafluorophenyl) borate,
triethylammonium tetrakis(pentafluorophenyl) borate,
tripropylammonium tetrakis(pentafluorophenyl) borate,
tri(n-butyl)ammonium tetrakis(pentafluorophenyl) borate,
N,N-dimethylanilinium tetrakis(pentafluorophenyl) borate,
N,N-diethylanilinium tetrakis(pentafluorophenyl) borate.

A preferred type of cocatalyst suitable for use with the metallocene complexes comprise ionic compounds comprising a cation and an anion wherein the anion has at least one substituent comprising a moiety having an active hydrogen.

Suitable cocatalysts of this type are described in WO 98/27119 the relevant portions of which are incorporated herein by reference.

Examples of this type of anion include:

triphenyl(hydroxyphenyl) borate
tri (p-tolyl)(hydroxyphenyl) borate
tris (pentafluorophenyl)(hydroxyphenyl) borate
tris (pentafluorophenyl)(4-hydroxyphenyl) borate

Examples of suitable cations for this type of cocatalyst include triethylammonium, triisopropylammonium, diethylmethylammonium, dibutylethylammonium and similar.

Particularly suitable are those cations having longer alkyl chains such as dihexyldecylmethylammonium, dioctadecylmethylammonium, ditetradecylmethylammonium, bis(hydrogentated tallow alkyl) methylammonium and similar.

Particular preferred cocatalysts of this type are alkylammonium tris(pentafluorophenyl) 4-(hydroxyphenyl) borates. A particularly preferred cocatalyst is bis(hydrogenated tallow alkyl) methyl ammonium tris (pentafluorophenyl) (4-hydroxyphenyl) borate.

With respect to this type of cocatalyst , a preferred compound is the reaction product of an alkylammonium tris(pentaflurophenyl)-4-(hydroxyphenyl) borate and an organometallic compound, for example triethylaluminium or an aluminoxane such as tetraisobutylaluminoxane.

The catalysts used to prepare the novel copolymers of the present invention may suitably be supported.

Suitable support materials include inorganic metal oxides or alternatively polymeric supports may be used for example polyethylene, polypropylene, clays, zeolites, etc.

The most preferred support material for use with the supported catalysts according to the method of the present invention is silica.Suitable supports are silicas having a median diameter (d50) from 20 to 70 μm, preferably from 30 to 60 μm. Particularly suitable supports of this type are Grace Davison D948 or Sylopol 2408 silicas as well as PQ Corporation ES70 or ES757 silica.

The support material may be subjected to a heat treatment and/or chemical treatment to reduce the water content or the hydroxyl content of the support material. Typically chemical dehydration agents are reactive metal hydrides, aluminium alkyls and halides. Prior to its use the support material may be subjected to treatment at 100°C to 1000°C and preferably at 200 to 850°C in an inert atmosphere under reduced pressure.

The porous supports are preferably pretreated with an organometallic compound preferably an organoaluminium compound and most preferably a trialkylaluminium compound in a dilute solvent.

The support material is pretreated with the organometallic compound at a temperature of -20°C to 150°C and preferably at 20°C to 100°C.

Particularly suitable catalysts for use in the preparation of the polyethylene powders of the present invention are metallocene complexes which have been treated with polymerisable monomers. Our earlier applications WO 04/020487 and WO 05/019275 describe supported catalyst compositions wherein a polymerisable monomer is used in the catalyst preparation. Polymerisable monomers suitable for use in this aspect of the present invention include ethylene, propylene, 1-butene, 1-hexene, 1-octene, 1-decene, styrene, butadiene, and polar monomers for example vinyl acetate, methyl methacrylate, etc. Preferred monomers are those having 2 to 10 carbon atoms in particular ethylene, propylene, 1-butene or 1-hexene. Alternatively a combination of one or more monomers may be used for example ethylene/1-hexene. The preferred polymerisable monomer is 1-hexene.

The polymerisable monomer is suitably used in liquid form or alternatively may be used in a suitable solvent. Suitable solvents include for example heptane.

The polymerisable monomer may be added to the cocatalyst before addition of the metallocene complex or alternatively the complex may be pretreated with the polymerisable monomer.

The novel copolymers of the present invention may suitably be prepared in processes performed in either the slurry or the gas phase.

A slurry process typically uses an inert hydrocarbon diluent and temperatures from about 0°C up to a temperature just below the temperature at which the resulting polymer becomes substantially soluble in the inert polymerisation medium. Suitable diluents include toluene or alkanes such as hexane, propane or isobutane. Preferred temperatures are from about 30°C up to about 200°C but preferably from about 60°C to 100°C. Loop reactors are widely used in slurry polymerisation processes.

The novel copolymers are most suitably prepared in a gas phase process. Gas phase processes for the polymerisation of olefins, especially for the homopolymerisation and the copolymerisation of ethylene and α-olefins for example 1-butene, 1-hexene, 4-methyl-1-pentene are well known in the art.

Typical operating conditions for the gas phase are from 20°C to 100°C and most preferably from 40°C to 85°C with pressures from sub-atmospheric to 100 bar.

Particularly preferred gas phase processes are those operating in a fluidised bed. Examples of such processes are described in EP 89691A and EP 699213A, with the latter being a particularly preferred process.

The low density polyethylene polymers (LDPE) of component (b) of the polymer blends of the present invention may be prepared by methods well known in the art, for example be prepared by use of conventional autoclave high pressure technology or by tubular reactor technology. The autoclave high pressure technology is preferred.

The LDPE may be a homopolymer of ethylene or a copolymer of ethylene and comonomers which include polar vinyl, conjugated and non-conjugated dienes, vinyl acids, vinyl esters, vinyl silanes, and the like. The LDPE may also comprise terpolymers. The most preferred LDPEs are homopolymers.

Use of the novel blends of the present invention leads to lower extrusion pressures as well as a reduction in the motor load and energy consumption even for those blends containing a low amount of the LDPE component. The selection of the LLDPE component also brings additional energy savings compared with prior art LLDPEs. The higher melt strengths of the LDPE component also leads to improvements in film processability, improved bubble stability as well as higher extrusion rates.

According to another aspect of the present invention there is provided a polymer blend comprising 3 % - 10% by weight of an LDPE, said blend having:

(i) Melt elasticity at 190°C, G'(G"=500 Pa) ≤ 110 Pa, preferably in the range 40 - 80 Pa and more preferably in the range 40 - 70 Pa,

(ii) Melt strengths at 100 $s^{-1}$ shear rate at 190°C, **MS**(100 $s^{-1}$) ≥ 4.8 cN, preferably in the range 5.6 - 9.0 cN and more preferably in the range 5.7 - 8.0 cN, and

(iii) Melt Strength shear rate derivative at 190°C, $\delta(\mathbf{MS})/\delta(\log \dot{\gamma}) \geq 5$ cN, preferably in the range 5.0 - 7.0 cN, and

The polymer blends of the present invention may be used for applications well known in the art for example films.
Films may be formed by conventional extrusion processes for example film blowing, film casting or film lamination. The blends of the present invention are particularly advantageous for blown film extrusion processes. The polymer blends may be used as components of monolayer or multilayer films.
Thus according to another aspect of the present invention there is provided a film comprising a polymer blend as hereinbefore described.
In particular the present invention further comprises a film comprising a polymer blend comprising

(a) 90 - 97% by weight of a copolymer of ethylene and an alpha olefin having from 3 to 10 carbon atoms, said copolymer having

(i) a density in the range 0.910 to 0.940 g $cm^{-3}$,
(ii) a melt index (190°C/2,16kg), $MI_2 < 5$, and
(iii) molecular weight distribution ($M_{w-cc}M_{n-cc}$, by classical GPC) in the range 2.0 - 5.0, and

(b) from 3 - 10% by weight of a low density polyethylene polymer having

(i) a density from 0.910 to 0.920 g $cm^{-3}$ and
(ii) a melt index (190°C/2,16kg), $MI_2 > 2$, and
(iii) a melt elastic modulus G'(G"= 500 Pa) ≥ 140 Pa at 190°C.

wherein the sum of (a) and (b) is 100%.

The films thus obtained from the blend of LLDPE component (a) and LDPE component (b) have mechanical properties (Dart Drop Impact strength, MD Tear strength, puncture resistance) of at least 50%, preferably in the range 60 - 95%, and more preferably in the range 70 - 90 % of those obtained on similar film blown with the pure (unblended) LLDPE component (a). The films exhibit improved optical properties in particular when the LDPE component is present in lower amounts. Improved tear resistance in transverse direction and increase shrinkage may be observed the latter to the benefit of shrink film applications.
The extrudability of the films of the present invention is characterised by an Energy Index that is at least 5%, preferably in the range 5 - 11% and more preferably in the range 6 -10%, lower than the original (or unblended component (a)) polymer during blown film extrusion process. This is particularly applicable to blends where the copolymer of component (a) has a density in the range 0.916 to 0.926 g $cm^{-3}$.
Moreover, the films can be extruded at higher temperature and low frostline height with the addition of LDPE according to the invention at a concentration as low as 5 wt%.
The present invention will now be illustrated with reference to the following examples.

## Methods of test (polymers)

Melt index: $MI_2$ (190°C/2.16 kg) and HLMI (190°C/21.6 kg) were measured in accordance with the procedures of ISO 1133 at 190°C using loads of 2.16 kg and 21.6 kg, respectively.
Density of the polyethylene was measured according to ISO 1183-1 (Method A) and the sample plaque was prepared according to ASTM D4703 (Condition C) where it was cooled under pressure at a cooling rate of 15°C/min from 190°C to 40°C. Dynamic rheological measurements are carried out, according to ASTM D 4440, on a dynamic rheometer (e.g., ARES) with 25 mm diameter parallel plates in a dynamic mode under an inert atmosphere. For all experiments, the rheometer has been thermally stable at 190°C for at least 30 minutes before inserting the appropriately stabilised (with antioxidant additives), compression-moulded sample onto the parallel plates. The plates are then closed with a positive normal force registered on the meter to ensure good contact. After about 5 minutes at 190°C, the plates are lightly compressed and the surplus polymer at the circumference of the plates is trimmed. A further 10 minutes is allowed for thermal stability and for the normal force to decrease back to zero. That is, all measurements are carried out after the samples have been equilibrated at 190°C for about 15 minutes and are run under full nitrogen blanketing.
Two strain sweep (SS) experiments are initially carried out at 190°C to determine the linear viscoelastic strain that would generate a torque signal which is greater than 10% of the lower scale of the transducer, over the full frequency (e.g. 0.01 to 100 rad/s) range. The first SS experiment is carried out with a low applied frequency of 0.1 rad/s. This test is used to determine the sensitivity of the torque at low frequency. The second SS experiment is carried out with a high applied frequency of 100 rad/s. This is to ensure that the selected applied strain is well within the linear viscoelastic

region of the polymer so that the oscillatory rheological measurements do not induce structural changes to the polymer during testing. In addition, a time sweep (TS) experiment is carried out with a low applied frequency of 0.1 rad/s at the selected strain (as determined by the SS experiments) to check the stability of the sample during testing.

Measurement of Melt Elastic Modulus G'(G"=500 Pa) at 190°C:

The frequency sweep (FS) experiment is then carried out at 190°C using the above appropriately selected strain level and the dynamic rheological data thus measured are then analysed using the rheometer software (viz., Rheometrics RHIOS V4.4 or Orchestrator Software) to determine the melt elastic modulus **G'**(G" = 500 Pa) at a constant, reference value (500 Pa) of melt viscous modulus (G").

Flow Activation Energy (Ea) Measurement

The bulk dynamic rheological properties (e.g., G', G" and η*) of all the polymers were then measured at 170°, 190° and 210°C. At each temperature, scans were performed as a function of angular shear frequency (from 100 to 0.01 rad/s) at a constant shear strain appropriately determined by the above procedure.

The dynamic rheological data was then analysed using the Rheometrics Software (TA Orchestrator). The following conditions were selected for the time-temperature (t-T) superposition and the determination of the flow activation energies ($\mathbf{E_a}$) at 190°C according to an Arrhenius equation, $\mathbf{a_T}$ = exp ($\mathbf{E_a}$/kT), which relates the shift factor ($\mathbf{a_T}$) to $\mathbf{E_a}$:

| | |
|---|---|
| Rheological Parameters: | G'(ω), G"(ω) & η*(ω) |
| Reference Temperature: | 190°C |
| Shift Method: | 2D (i.e., horizontal & vertical shifts) Minimisation |
| Calculation Method: | Residual Minimisation |
| Shift Accuracy: | High |
| Interpolation Mode: | Cubic Spline |

Rheotens Extensional Rheometry

The melt strength of the polymer is measured at 190°C, using a GöttfertRheotens extensional rheometer placed beneath a GöttfertRheotester 2000 Capillary Rheometer (12 mm barrel diameter). This is achieved by extruding the polymer at a constant pressure (P) through a die of 1.5 mm diameter and 30 mm in length, with a 90° entry angle. The spin-line length (L) distance between die exit and the centre of the upper wheels is fixed at 101 mm.

Once an extrusion pressure is selected, the piston of the capillary rheometer will travel through its 12 mm diameter barrel at a speed that is sufficient to maintain that pressure constant using the constant pressure system of the rheometer. The nominal wall shear rate ($\dot{\gamma}$) for a given extrusion pressure can then be computed for the polymer at the selected pressure.

In a Rheotens test, the polymer strand is extruded continuously at a given extrusion pressure and it is taken up by the Rheotens wheels after a spin-line length L, where the wheels turn with a steadily increasing velocity v and draw down the polymer strand. The resistance of the material against this drawdown is then measured by a force balance in the arm onto which the wheels are fixed.

At the start of the experiment, the velocity of the Rheotens wheels is adjusted in such a way that it is equal to the actual velocity relative to the strand. Therefore, if a material exhibits extrudate swell at the die exit, $v_s$ is smaller than the extrusion velocity $v_0$ calculated from volumetric output, density and the die diameter. The signal of the force balance of the transducer is equal to zero at the starting point, as the material is not yet elongated.

The force signal can be calibrated with defined weights as described in the manufacturer (Göttfert) document and procedure. The resulting force signal F is measured until rupture of the strand. The maximum force at rupture is also referred to as melt strength (MS), while the maximum velocity is called drawability of the melt.

Melt strength measurements are often confronted with a melt resonance, which is hydrodynamic instability that is reflected by growing oscillations in force as the elongation proceeds. It is known to those of ordinary skill in the art that the melt strength (MS) of a sample exhibiting melt resonance can be obtained by fitting a best line to the Rheotens Force - Velocity (F - v) curve from the initial non-resonated region through the mid-point of the oscillating peaks (of increasing amplitude as elongation proceeds) along the resonance region until the point of rupture (See Figure).

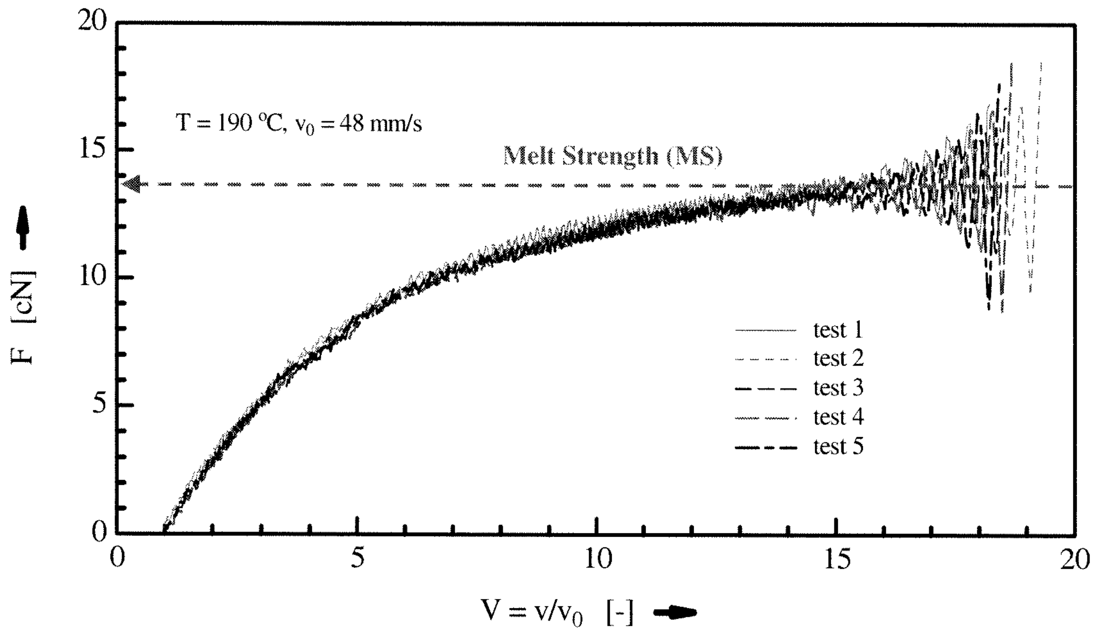


Once a constant pressure is attained after launching the piston of the capillary rheometer, the zero of the Rheotens instrument is set in the software; the strand is cut and clamped between the upper rotating wheels.

The initial wheel velocity is chosen so as to guide the extruded strand, i.e. at zero force. In practice it is preferably to starting the test at slightly higher velocities in order to achieve a better clamping of the strand when it starts thinning and enabling one to reach higher velocities without problems.

In principle, there is an effect of the weight of the strand below the Rheotens on the force measurement. To alleviate this effect the strand is manually guided once it reaches the table (~ 360 mm below the wheels).

The extrudate can be drawn with a pair of gear wheels at accelerating speed (*v*) range of (3 - 24 $mm/s^2$). Lower velocities give the best resolution but a higher acceleration can be useful to postpone the instability. Typical acceleration of 3 $mm/s^2$ was used when tested at 190°C. The drawing force (F) experienced by the extrudate is measured with a transducer (appropriately calibrated in accordance with the manufacturer (Göttfert) recommended procedures) and recorded accordingly together with the drawing speed. The maximum force at break is defined as melt strength (**MS**) at a constant extrusion pressure (**P**) or at its corresponding extrusion rate ($\dot{\gamma}$). Three or four extrusion pressures are typically selected (6, 8, 12, 16 MPa) for each polymer depending on its flow properties. For each extrusion pressure, a minimum of 3 MS measurements are performed and an average MS value is then obtained.

The derivative functions of the extrusion pressure and shear rate dependent melt strengths, δ(**MS**)/δ(**P**) and δ(**MS**)/δ(log$\dot{\gamma}$), for each polymer are computed from the slopes of the plots of the average **MS** against the extrusion pressure (**P**) and against the logarithm of the shear rate (log $\dot{\gamma}$), by linear and natural logarithmic regression respectively. The melt strength at shear rate of 100 $s^{-1}$, **MS**(100 $s^{-1}$), can also be computed from the natural logarithmic (Ln) trend/regression of the MS vs. (log$\dot{\gamma}$) plot: i.e.,

$$\mathbf{MS}(\dot{\gamma}) = m\ \mathrm{Ln}(\dot{\gamma}) + C$$

where δ(**MS**)/δ(log$\dot{\gamma}$) = 2.303 x m, and **MS**(100 $s^{-1}$) = m Ln (100) + C

High Temperature Gel Permeation (Size Exclusion) Chromatography Analysis

The molecular structures of the polymers were characterized using two independent systems of High Temperature Gel Permeation (or Size Exclusion) Chromatography Analysis: (i) A route classical GPC by conventional polystyrene (PS) calibration method for apparent molecular weight distribution (e.g., number average, $M_{n\text{-}CC}$, and weight average molar mass, $M_{w\text{-}CC}$, values) determination and (ii) A Multi-Angle Laser Light Scattering apparatus (SEC/MALLS) for Absolute Molecular Weight Distribution (e.g., number average, $M_{n\text{-}LS}$, and weight average molar mass, $M_{w\text{-}LS}$) determination, as well as the apparent molecular weight distribution by conventional PS calibration (e.g., number average, $M_{n\text{-}Calib}$, and weight average molar mass, $M_{w\text{-}Calib}$) determination. Hence, there are two set of apparent molecular weights parameters appropriately labelled in accordance with their GPC systems thus employed.

High Temperature Gel Permeation (Size Exclusion) Chromatography Analysis by Calibration (Classical GPC) for Apparent Molecular Weight Distribution Determinatio

Apparent molecular weight distribution and associated averages, uncorrected for long chain branching, were determined by Gel Permeation (or Size Exclusion) Chromatography according to ISO16014-1, ISO 16014-2 and 16014-4, using a PL 220 of Polymer Laboratories with 4 WATERS STYRAGEL HMW 6E columns of 30 cm in length and 1 Waters Styragel 4.6 x 30 mm guard column and a differential refractometer detector. The solvent used was 1,2,4 Trichlorobenzene at 150°C, which is stabilised with BHT, of 0.2 g/litre concentration and filtered with a 0.45μm Osmonics Inc. silver filter. Polymer solutions of 0.8 g/litre concentration were prepared at 160°C for one hour with stirring only at the last 30 minutes. The nominal injection volume was set at 400μl and the nominal flow rate was 1 ml/min.

A relative calibration was constructed using 13 narrow molecular weight linear polystyrene standards:

| PS Standard | Molecular Weight |
|---|---|
| 1 | 7 520 000 |
| 2 | 4 290 000 |
| 3 | 2 630 000 |
| 4 | 1 270 000 |
| 5 | 706 000 |
| 6 | 355 000 |
| 7 | 190 000 |
| 8 | 114 000 |
| 9 | 43 700 |
| 10 | 18 600 |
| 11 | 10 900 |
| 12 | 6 520 |
| 13 | 2 950 |

The elution volume, V, was recorded for each PS standards. The PS molecular weight was then converted to PE equivalent using the following Mark Houwink parameters $\mathbf{k}_{ps}$ =1.21 x $10^{-4}$ dl.$g^{-1}$, $\alpha_{ps}$= 0.707, $\mathbf{k}_{pe}$= 4.06 x $10^{-4}$ dl.$g^{-1}$, $\alpha_{pe}$= 0.725. The calibration curve Mw $_{PE}$ = f(V) was then fitted with a first order linear equation. All the calculations are done with Empower 2 software from Waters.

High Temperature Gel Permeation (Size Exclusion) Chromatography Analysis coupled with a High Temperature Multi-Angle Laser Light Scattering apparatus (SEC/MALLS) for Absolute Molecular Weight Distribution Determination

The measurements were carried out in a high temperature GPC (PL 220, Varian Inc.) with an on-board differential refractometer. It is coupled with a high temperature multi-angle laser light scattering apparatus (MALLS, Dawn EOS, Wyatt Technologies). The measuring temperature was 140°C, for both the sample and the column compartments, and 1,2,4 trichlorobenzene was used as solvent which was distilled in vacuum at a pressure of $10^{-2}$ mbar or better prior to use. The temperature was calibrated by thermocouples in the sample and the carousel compartment. The solvent was degassed using the on-board degasser of the PL 220. The flow rate was chosen to 0.5 ml/min and 200 μl of the polymer solution was injected onto the column system consisting of three columns Shodex UT806M (Showa Denko, exclusion limit determined for polystyrene molar mass $5\times10^7$ g/mol) and one high molar mass separation column Shodex UT807 (exclusion limit $2\times10^8$ g/mol). The concentration of the polymer eluted from the columns was measured by means of two concentration detectors using different detection techniques (infra red absorption, polyCHAR IR4, and a differential refractive index detector, an internal detector of the PL 220). Data were collected and processed using the Wyatt Astra software 4.73. All 18 angles of the MALLS were used to evaluate the data.

Solutions of the polymers were prepared in individual sample vials as follows: about 12 mg of polymer was weighed out into the vial and 4 ml of 1,2,4-trichlorobenzene (TCB), stabilized with 0.1 weight% Irganox 1035 was added. The samples were allowed to dissolve for three hours at 160°C. The solution process was supported by slight agitation by hand. Samples were not filtered. After the dissolution which is controlled by a visual inspection, the solutions are transferred into preheated measuring vials of 2ml content and placed into the auto-sampler of the HT-GPC apparatus. Two injects from individual vials (duration of collection run of 105 min each) from each solution were performed to assure reproducibility, which was verified by using the raw signal of the MALLS and the concentration signal from the IR-detector. In addition, no significant influence of the residence time in the HT-GPC apparatus was found (indicating no polymer

degradation) for all the measurements.

The mass recovery, **r**, from the columns is being defined by integration of the concentration signal as follows

$$r = \frac{m_{detected}}{m_{injected}} \cdot 100\%$$

Comparing the detected mass $\mathbf{m}_{detected}$ with the injected mass $\mathbf{m}_{injected}$ it can be used to evaluate how large the amount of gels/insoluble material is or if material is being absorbed on the columns.

The mass recovery is around 90% or larger for all samples measured. In routine measurements values of 90 % and more are typical and indicate that all dissolved material is eluted from the columns and that no gels are present.

A similar value is found for a narrow molar mass distribution ($M_{w-LS}$ = 200 kg/mol, $M_{z-LS}$ = 375 kg/mol and $M_{w-LS}/M_{n-calib}$ = 2) linear homo-polyethylene sample from the IUPAC Working Party IV 2.2, Project Subgroup 5 (thus referred as **IUPAC 5A** linear standard, that was previously used and published in a paper by Claus Gabriel, Esa Kokko, Barbro Löfgren, Jukka Seppälä, Helmut Münstedt, "Analytical and Rheological Characterization of Long-Chain Branched Metallocene-catalyzed Ethylene Homopolymers", Polymer 43 (2002) 6383-6390).

| Designation | $\mathbf{M}_{w-LS}$, **kg/mol** (absolute) | $\mathbf{M}_{w-calib}$, **kg/mol** (from calibration) | $\mathbf{M}_{n-calib}$, **kg/mol** (from calibration) | $\mathbf{M}_{w-LS}/\mathbf{M}_{n-calib}$ |
|---|---|---|---|---|
| IUPAC 5A | 200±3 | 200±1 | 100±2 | 2.0±0.1 |

The radii of gyration for polyethylene **IUPAC 5A** show the behaviour of linear polymers, with an average value $<\mathbf{r}_g^2>^{0.5}$ of 45.6 nm, and can be described by a power-law with an exponent of 0.58 [T. Sun, P. Brant, R.R. Chance, W.W. Graessley, "Effect of Short Chain Branching on the Coil Dimensions of Polyolefins in Dilute Solution", Macromolecules 34 (2001) 6812 - 6820] which is in agreement with literature (P. Tackx and J.C.J.F Tacx, Polymer 39 (1998) 3109 - 3113).

The data collection and the evaluation of the measurements were performed under ASTRA 4.73 (Wyatt Technologies). The concentration signal from the IR-detector was used in the evaluation of the data because of its higher sensitivity. The determination of the absolute molar mass and of the radius of gyration $<\mathbf{r}_g^2>^{0.5}$ for each fraction eluted was done in a linear Zimm-plot. In parallel the same concentration signal was collected and evaluated via the calibration curve connecting elution volume with the molar mass of polymer standards using the WinGPC 6.20 software (Polymer Standard Services).

The GPC was calibrated with 13 polystyrenes standards of Polymer Laboratories, with narrow molar mass distribution characterized by $M_w/M_n$-values below 1.1. The calibration curve spans a molar mass range from 0.58 kg/mol to 11600 kg/mol, with the individual molar masses at 11600, 7300, 2750, 1750, 900, 490, 230, 70.95, 30.0, 10.68, 3.95, 1.3, and 0.58 kg/mol.

The standards were measured in three batches. The Table below gives the combinations and the concentrations of the standards used. The standards were dissolved in about 7 ml TCB using the dissolution method similar to that of the polyethylene samples except that the dissolution time was only 60 minutes. The chromatographic concentrations thus used were low enough to eliminate the concentration effects on molecular weight (the $2^{nd}$ viral coefficient effects).

**Designation of the calibration batches**

| | Standard, [kg/mol] | Concentration, [mg/ml] |
|---|---|---|
| Batch 1 | 11600 | 0.5 |
| | 1750 | 0.75 |
| | 230 | 1.5 |
| | 10.68 | 2.5 |
| | 0.58 | 3.0 |
| Batch 2 | 2750 | 0.5 |
| | 490 | 0.75 |
| | 30 | 1.5 |
| | 3.95 | 3.0 |

(continued)

| | Standard, [kg/mol] | Concentration, [mg/ml] |
|---|---|---|
| Batch 3 | 7300<br>900<br>70.95<br>1.3 | 0.5<br>0.75<br>1.5<br>3.0 |

For the measurements of polyethylene samples the polystyrene calibration was converted into a polyethylene calibration using the universal calibration technique. The following Mark Houwink parameters, $\mathbf{k}_{ps}$ =1.21 x $10^{-4}$ dl.g$^{-1}$, $\alpha_{ps}$= 0.707; $\mathbf{k}_{pe}$= 4.06 x $10^{-4}$ dl.g$^{-1}$, $\alpha_{pe}$= 0.725 were used to correct for the different hydrodynamic volumes of polystyrene and polyethylene in solution. The refractive index concentration coefficient, dn/dc, of 0.104 ml.g$^{-1}$has been used. All chromatograms were corrected with respect to the elution volume of the internal standard.

The multi-detector offsets were determined using a narrowly distributed PS (M=30.000 g/mol), according to Method 1 described in "Data Interpretation For Coupled Molecular-Weight Sensitive Detectors In SEC - Interdetector Transport Time" by P. Cheung, St. Balke and Th. Mourey, (published by Journal Of Liquid Chromatography 15(1) (1992) 39-69, DOI: 10.1080/10826079208018808). It is performed as follows (feature of the ASTRA software):

The peaks of the IR and RI detector are shifted along the retention volume axis until the Peak maximum and the rising flank of the peak coincide with peak of the MALLS 90° detector. The shift in volume between the detectors is stored in the software.

The SEC/MALLS system yields sample bulk absolute number average ($M_n$) and weight average molar mass ($M_w$) values (namely, $\mathbf{M}_{w-LS}$ and $\mathbf{M}_{n-LS}$) from the MALLS apparatus, and with the conventional universal calibration method produces also the corresponding apparent values (namely, $\mathbf{M}_{w-Calib}$ and $\mathbf{M}_{n-Calib}$). The determination of the radius of gyration $<\mathbf{r}_g^2>^{0.5}$ for each fraction eluted was also done in a linear Zimm-plot.

The branching in the polymer can be evaluated from the comparison of the mean square radius of gyration of the sample, $[<\mathbf{r}_g^2>]_{br}$, against that of the **IUPAC 5A** linear standard, $[<\mathbf{r}_g^2>]_{lin}$, for each fraction (i.e., at the same molecular weight), yielding the branching index (or contraction) factor, **g,** of the sample (B.H.M. Zimm, W.H. Stockmayer, "The Dimensions of Molecules Containing Branching and Rings", J. Chem. Phys. 17(12) (1949) 1301 - 1314):

$$g = \frac{\left\langle r_g^2 \right\rangle_{br}}{\left\langle r_g^2 \right\rangle_{lin}}$$

For short and long-branched molecules, a contraction of the coils in solution with **g** < 1 is typically observed. The number of branches per molecule, or the average number of branches per 1000 monomers, can also be calculated from the **g** ratio.

Although the melt rheology of a polymer does not appear to be significantly affected by the presence of short chain branching (SCB), the latter does influence the size-mass relationship and hence on the characterization of MWD and long chain branching (LCB) using SEC/MALLS, [for example, see T. Sun, P. Brant, R.R. Chance, W.W. Graessley, "Effect of Short Chain Branching on the Coil Dimensions of Polyolefins in Dilute Solution", Macromolecules 34 (2001) 6812 - 6820].

The amounts of short and long branching each contribute to the branching index have been described in the literature by the formula:

$$\mathbf{g} = \mathbf{g}_{LCB} \times \mathbf{g}_{SCB},$$

and there are few reliable theoretical relationships between the radius of gyration ($\mathbf{r}_g$) and the short chain branching (SCB) content due to the complex relationship and interaction of the polymer dimension with its environments (e.g., polymer chains - solvent interaction, 'goodness' of solvent, etc). The correction of SCB effect on $\mathbf{r}_g$ has often been done empirically [for example, see Youlu Yu et al, Polymer 46 (2005) 5165 - 5182), and T. Sun, P. Brant, R.R. Chance, W.W. Graessley, "Effect of Short Chain Branching on the Coil Dimensions of Polyolefins in Dilute Solution", Macromolecules 34 (2001) 6812 - 6820].

The literature study of Sun *et al* on the size - mass contribution of SCB has shown that the short chain branching

index or SCB contraction factor, $\mathbf{g}_{SCB}$, of 4 series of copolymers of ethylene ($M_w/M_n$ ~ 1.89 - 4.26, with propylene, 1-butene, 1-hexene and 1-octene) varies linearly with comonomer weight fraction, with slope that depends on the comonomer type. For example, in the case of 1-hexene copolymers of ethylene, Tables 1 and 4 of Sun *et al* publication yielded a linear relationship (with a coefficient of correlation or determination, $R^2 = 0.997$) between the average SCB branching index ($\mathbf{g}_{SCB}$) with the weight fraction (in %) of 1-hexene in the copolymers, as described by the following equation:

$$\mathbf{g}_{SCB} = -0.0058 \times [\mathbf{EH}] + 0.9771,$$

where [**EH**] is the weight fraction (wt %) of 1-hexene in the copolymers of ethylene.

Accordingly, for hexene-copolymers of ethylene in the similar range of $M_w/M_n$, one may empirically and approximately correct the SCB effect using the above equation to obtain an average branching index predominantly (if not completely) due to long chain branching, i.e., $\mathbf{g}_{corrected} \cong \mathbf{g}_{LCB}$, for the case where the SEC/MALLS experimental set up does not have an additional IR detector for simultaneous FTIR - SCB measurements, and/or have suitable set of SCB PE standards for calibration.

The indicative of the presence of long chain branching (LCB) in the polymer can also be observed from the differences (or the ratio, $M_{w-LS}$ /$M_{w-calib}$) between the absolute weight-average molecular weight ($\mathbf{M}_{w-LS}$), as measured by the MALLS apparatus, and the apparent weight-average molecular weight ($\mathbf{M}_{w-calib}$), obtained by the conventional calibration route, using the same SEC/MALLS system during the same run.

## Film Characteristics

Prior to testing, all the films were stored in a conditioned room (23°C, 50 % humidity) for at least 40 hours after extrusion.

Dart Drop Impact strength (DDI) was measured by ISO 7765-1 (1988) (Method A), using a Tufnol (Carp Brand to BS.6128) 70g Dart Head and the diameter of the incremental weights is equal to the diameter of the dart head (38.1 mm).

Haze by ASTM D1003-92 and Gloss (45°) by ASTM D2457-90.

Tear strength (Elmendorf) in machine (MD) and transverse (TD) directions by ASTM D1922-93.

Tensile properties (500 mm/min) and secant modulus (1%, 5 mm/min) were measured on a Zwick 1445 equipment with a load cell of 1000 N according to ISO 527-1&3 (1995). Five distinct film specimens (type 2) were measured both in MD and TD directions, and the average value is reported.

Shrinkage measurements in MD and TD directions according to ISO 14616 (1997) were performed after conditioning in an oven at 160°C for blended materials containing mLLDPE partner with a density lower than 922 $kg/m^3$, or 170°C for blended materials containing mLLDPE partner with a density higher than 925 $kg/m^3$.

## Examples - LLDPE components I - IX

LLDPE components I to VI were prepared by the copolymerisation of ethylene with 1-hexene in a gas phase fluidized bed reactor under the general process settings disclosed in WO 06/085051 in the presence of the constrained geometry catalyst disclosed in WO 2010/000557. The details of the polymerisation conditions are summarized in Table 1

**TABLE 1**

| | | I | II | III | IV | V | VI |
|---|---|---|---|---|---|---|---|
| Reactor diameter | m | 5 | 5 | 5 | 0.74 | 5 | 0.74 |
| Temperature | °C | 80 | 80 | 82 | 80 | 80 | 76 |
| Bed height | M | 15.2 | 15.2 | 15.2 | 6.0 | 15.2 | 5,8 |
| Ethylene partial pressure | Bar | 12.0 | 12.0 | 12.0 | 13.2 | 11.5 | 12.5 |
| Hydrogen/ethylene ratio | bar/bar | 0.0031 | 0.0039 | 0.0027 | 0.0025 | 0.0027 | 0.0028 |
| Hexene/ethylene ratio* | wt% | 8.8 | 9.3 | 5.8 | 7.6 | 9.6 | 10.5 |
| Pentane partial pressure | Bar | 2.4 | 2.4 | 3.2 | 2.9 | 1.5 | 2.3 |
| Residence time | h | 5 | 5 | 5 | 4.1 | 6.5 | 3.7 |
| Space time yield | $kg/h/m^3$ | 72 | 72 | 60 | 84 | 55 | 80 |
| *ratio based on the mass flow-rates of hexene and ethylene to the reactor | | | | | | | |

LLDPE components VII, VIII and IX are metallocene-based polyethylenes available from ExxonMobil Chemical Company under the trade names Exceed™ 1018-CA, Enable™ 20-05 CH and Enable™ 27-05 CH, respectively. It is known from public available information (e.g. WO 2009/109367) that Exceed™ grades are linear metallocene polyethylenes substantially free of long chain branching obtained in a gas phase process using a non-bridged bis-cyclopentadienyl zirconocene transition metal component, while Enable™ grades are homogeneously branched long-chain branched linear polyethylenes obtained in a gas phase process using a supported catalyst with a bridged bis-indenyl zirconocene complex

**TABLE 2**

| LLDPE | I | II | III | IV | V | VI | VII | VIII | IX |
|---|---|---|---|---|---|---|---|---|---|
| | | | | | | | | | |
| Density (g/cm$^3$) | 0.9177 | 0.9171 | 0.9256 | 0.9183 | 0.9181 | 0.9127 | 0.9185 | 0.9202 | 0.9273 |
| Hexene Content (wt %) | 7.9 | 8.7 | 5.4 | 8.3 | 8.0 | 12.0 | n.a. | n.a. | n.a |
| $MI_2$ (190°C, g/ 10min) | 1.29 | 2.08 | 1.35 | 0.8 | 0.95 | 0.83 | 1.10 | 0.50 | 0.44 |
| HLMI (190°C, g/ 10min) | 25.2 | 40.5 | 28.7 | 13 | | 16.3 | 16.1 | 20 | 21.0 |
| HLMI/$MI_2$ (= MIR) | 19.5 | 19.5 | 21.2 | 22.0 | | 19.6 | 14.6 | 40 | 47.7 |
| G'(G"=500Pa), (190°C, Pa) | 44 | 30 | 55 | 58 | 64 | 33 | 8 | 116 | 123 |
| Ea (kJ/mol) 190°C | 32.2 | 32.3 | 32 | 31.7 | | 32 | 30.5 | 56 | 68,7 |
| Melt Strength at 100 $s^{-1}$ shear rate, **MS**(100 $s^{-1}$), (190°C, cN) | 3.6 | 2.2 | | 5.1 | | 3.9 | 3.7 | 5.6 | 4.5 |
| Melt Strength shear rate derivative, $\delta$(**MS**)/ $\delta(\log \dot{\gamma}$ (190°C, cN) | 3.92 | 1.83 | | 4.06 | | 3.08 | 4.31 | 4.79 | 3.40 |
| Melt Strength pressure derivative, $\delta$(**MS**)/ $\delta$(**P**),(19 0°C, cN/MPa) | 0.232 | 0.12 | | 0.195 | | 0.18 | 0.13 | 0.367 | 0.252 |
| $M_{w-cc}$ (kDa) (classical) | 120 | 111 | 123 | 136 | 115 | 129 | 136 | 116 | 121 |
| $M_{w-cc}/M_{n-cc}$ (classical) | 3.7 | 3.7 | 4.2 | 3.7 | 3.8 | 3.2 | 2.8 | 3.3 | 3.8 |
| $M_{w-LS}$ /$M_{n-calib}$ (SEC/MALLS)* | 3.4 | | | | 4.3 | | | | |
| $M_{w-LS}$ /$M_{w-calib}$ (SEC/MALLS)* | 0.98 | | | | 1.04 | | | | |
| $<r_g^2>^{0.5}$, (nm) | 30 | | | | 51 | | | | |
| Branching Index, or Contraction Factor***, **g** | 0.92 | | | | 0.88 | | | | |

(continued)

| LLDPE | I | II | III | IV | V | VI | VII | VIII | IX |
|---|---|---|---|---|---|---|---|---|---|
| SCB Corrected Branching Index, or LCB Contraction Factor, $\mathbf{g}_{corrected} \cong \mathbf{g}_{LCB}$ | 0.99 | | | | 0.95 | | | | |
| $M_{W\text{-}LS}$ (kDa) (SEC-MALLS) | 109 | | | | 117 | | | | |
| **where $M_{w\text{-}LS}$ was measured by MALLS; $M_{w\text{-}calib}$ and $M_{n\text{-}calib}$ were measured by calibration using the same SEC/MALLS apparatus and experimental set-up as described (i.e., they were not measured by the classical GPC procedure).*<br>*** *numerical average* | | | | | | | | | |

LDPE components A and B

LDPE components A and B were produced in a dual reactor high pressure DuPont autoclave polymerization process at an output rate of about 18 tons/hour. The typical polymerization conditions are summarized in Table 3 and polymer properties are shown in Table 4.

**TABLE 3**

| LDPE A | | | LDPE B | |
|---|---|---|---|---|
| ***Reactor 1*** | | | ***Reactor 1*** | |
| Temperature (°C) | 250 | | Temperature (°C) | 205 |
| Pressure (bars) | 1450 | | Pressure (bars) | 1850 |
| $C_2$ inlet temp (°C) | 25 | | $C_2$ inlet temp (°C) | 25 |
| | | | | |
| Residence time (s) | 19 | | Residence time (s) | 21 |
| Peroxide | $^t$Bu-peroxy-3,5,5-trimethyl hexanoate | | Peroxide | $^t$Bu-peroxy-2-ethyl hexanoate |
| Chain transfer agent | propylene | | Chain transfer agent | propylene |
| ***Reactor 2*** | | | ***Reactor 2*** | |
| Temperature (°C) | 250 | | Temperature (°C) | 240 |
| Pressure (bars) | 1450 | | Pressure (bars) | 1850 |
| $C_2$ inlet temp (°C) | 25 | | $C_2$ inlet temp (°C) | 25 |
| Residence time (s) | 7 | | Residence time (s) | 8 |
| Peroxide | $^t$Bu-peroxy-3,5,5-trimethyl hexanoate | | Peroxide | $^t$Bu-peroxy-3,5,5-trimethyl hexanoate |
| Chain transfer agent | propylene | | Chain transfer agent | propylene |

**TABLE 4**

| LDPE | A | B |
|---|---|---|
| | | |
| Density ($g/cm^3$) | 0.9162 | 0.9217 |
| $MI_2$ (190°C, g/10 min) | 3.7 | 1.4 |
| HLMI (190°C, g/10 min) | 146.2 | 76 |
| HLMI/$MI_2$ (= MIR) | 39.5 | 54.3 |
| G'(G"=500Pa) (190°C, Pa) | 153 | 104 |
| Ea (kJ/mol) 190°C | 50.1 | 68.5 |
| Melt Strength at 100 $s^{-1}$ shear rate, **MS**(100 $s^{-1}$), (190°C, cN) | 12.5 | 7.9 |
| Mn-cc(kDa)(classical) | 22.5 | 25.5 |
| $M_{w-cc}$ (kDa) (classical) | 212 | 137 |
| Mz-cc(KDa)(classical) | 802 | 458 |
| $M_{w-cc}/M_{n-cc}$ (classical) | 9.4 | 5.4 |
| $M_{w-LS}$ (kDa) (SEC-MALLS)* | 850 | 210 |
| Contraction Factor**, **g** | 0.24 | 0.35 |
| $\mathbf{M}_{w-LS}$ /$\mathbf{M}_{n-Calib}$ (SEC/MALLS)* | 40.5 | 10.5 |
| $M_{w-LS}$ /$M_{w-calib}$ (SEC/MALLS)* | 3.35 | 1.72 |
| **where $M_{w-LS}$ was measured by MALLS; $M_{w-calib}$ and $M_{n-calib}$ were measured by calibration using the same SEC/MALLS apparatus and experimental set-up as described (i.e., they were not measured by the classical GPC procedure).*<br>*** numerical average* | | |

The following 2-component blends were prepared by combination of the above LLDPE copolymers and the low density polyethylenes (LDPE) fed to the extruder via two distinct feeders.

Blown film extrusion of mLLDPE-LDPE compositions

Monolayer films were extruded on a CMG 1200 TSA extruder provided by CostruzioniMeccaniche Gallia:

| | |
|---|---|
| Screw diameter | 55 mm |
| Screw L/D ratio | 30 |
| Die diameter/gap | 150/2.2 mm |
| Screen pack | flat |

Extrusion conditions set up (unless otherwise stated):

| | |
|---|---|
| Screw temperature profile | 200/210/210/220/220°C |
| Die temperature profile | 220/220/220/220°C |
| Output*(Q) | 50 kg/h |
| Take-off speed | 30 m/min |
| Blow-up ratio | 2.5:1 |
| Cooling air temperature | 20°C |
| Air blower adjustment | 22 - 29% to maintain frostline height |
| Frostline height | 430 mm |

(continued)

| | |
|---|---|
| Film thickness | 25 μm |
| (*: The output rate, Q, and composition of the blends were measured by the actual weight variation on the feeders graduated with weight scales. The screw speed is automatically varied in order to achieve the required output rates.) | |

Further film extrusion conditions are shown in Table 5.

**TABLE 5- Film Extrusion of polymer blends**

| Ex | LLDPE | LDPE | LLDPE/ LDPE wt%/wt% | Melt Temp (°C) | Melt Pressure (bars) | Motor load /Amperage (A) | Screw speed (rpm) | Energy Index (rpmxA/Q) |
|---|---|---|---|---|---|---|---|---|
| CE1 | I | A | 98:2 | 217 | 213 | 83 | 51 | 84.8 |
| 2 | I | A | 95:5 | 217 | 213 | 81 | 51 | 82.6 |
| 3 | I | A | 93:7 | 216 | 206 | 80 | 51 | 81.1 |
| 4 | I | A | 90:10 | 217 | 210 | 79 | 51 | 80.6 |
| CE 5 | I | A | 80:20 | 217 | 204 | 75 | 51 | 76.5 |
| CE 6 | I | none | 100:0 | 217 | 213 | 85 | 52 | 88.4 |
| CE 7 | I | B | 95:5 | 217 | 212 | 81 | 52 | 84.2 |
| CE8 | I | B | 90:10 | 217 | 210 | 79 | 52 | 82.2 |
| CE 9* | II | none | 100:0 | 217 | 162 | 74 | 51 | 75.5 |
| 10 | II | A | 92:8 | 216 | 160 | 71 | 50 | 71.4 |
| CE 11 | III | none | 100:0 | 217 | 205 | 80 | 52 | 83.2 |
| 12 | III | A | 95:5 | 216 | 201 | 76 | 51 | 77.5 |
| 13 | III | A | 90:10 | 217 | 195 | 73 | 51 | 74.5 |
| CE 14 | IV | none | 100:0 | 217 | 270 | 88 | 61 | 107.0 |
| 15 | IV | A | 95:5 | 217 | 259 | 84 | 61 | 102.6 |
| CE 16 | VI | none | 100:0 | 216 | 285 | 100 | 55 | 110.0 |
| CE17** | VII | none | 100.0 | 198 | 292 | 91 | 58 | 105.6 |
| 18 | VII | A | 95:5 | 217 | 254 | 87 | 56 | 97.4 |
| CE 19 | VIII | none | 100:0 | 212 | 232 | 74 | 59 | 87.3 |
| CE 20 | IX | none | 100:0 | 217 | 226 | 79 | 58 | 91.6 |

*: *to achieve a good bubble stability, frostline height had to be increased up to 650 mm (instead of 430 mm)*
***: extrusion was not possible under reference conditions. Extrusion temperature has been decreased down to 200°C (instead of 220°C).*

It can be seen from Table 5 that the use of the novel blends of the present invention lower extrusion pressures as well as a reduction in the motor load and energy consumption (i.e., lower the Energy Index) may be observed even for those blends containing a low amount of the LDPE component (e.g., Ex 2 - 4 versus CE 1, for LLDPE I with LDPE A, and CE 6). The selection of the LLDPE component I - VI brings additional energy savings compared with LLDPEs VII - IX (i.e., CE 17, CE 19 and CE 20). The selection of the LDPE A leads to better improvements in extrudability, as compared to LDPE B during blown film extrusion (e.g., Ex 2 and Ex 4 blends, of 5% and 10% LDPE A with LLDPE I, exhibit respectively lower Energy Indexes than those of corresponding CE 7 and CE 8 blends of LLDPE I with LDPE B at similar concentrations).

Moreover, the addition of LDPE A at a concentration as low as 5 wt% makes possible to extrude film at higher temperature and low frostline height (blend Ex 18 vs. CE 17 and blend Ex 10 vs. CE9).

**TABLE 6 - Properties of the polymer blends**

| Ex | LLDPE | LDPE | LLDPE/ LDPE | G'(G"=500 Pa) (Pa) | Melt Strength at 100 $s^{-1}$ shear rate, **MS**(100 $s^{-1}$), (190°C, cN) | Melt Strength shear rate derivative, $\delta$(**MS**)/$\delta$(log $\gamma$), (190°C, cN) | Melt Strength pressure derivative, $\delta$(**MS** )/$\delta$(**P**), (190°C, cN/MPa) | Ea (kJ/ mol) | Mw (kDa) classic al | Mw/M n classic al |
|---|---|---|---|---|---|---|---|---|---|---|
| CEI | I | A | 98:2* | 46* | | | | | | |
| 2 | I | A | 96:5* | 50* | | | | | 122* | 3.8* |
| 3 | I | A | 93:7* | 53* | | | | | | |
| 4 | I | A | 90:10** | 57 | 7.1 | 6.59 | 0.40 | | | |
| CE5 | I | A | 80:20** | 68 | 9.1 | 5.84 | 0.37 | | | |
| CE 6 | I | none | 100:0 | 44 | 3.6 | 3.92 | 0.23 | 32.2 | 112 | 3.7 |
| CE 7 | I | B | 95:5* | 50* | | | | | | |
| CE 8 | I | B | 90:10** | 56 | 4.7 | 2.84 | 0.22 | | | |
| CE 9 | II | none | 100:0 | 30 | | | | 32.3 | III | 3.7 |
| 10 | II | A | 92:8* | 42* | | | | | | |
| CE 11 | III | none | 100:0 | 55 | | | | 32.0 | 123 | 4.2 |
| 12 | III | A | 95:5** | 60 | | | | | 126 | 4.5 |
| 13 | III | A | 90:10** | 68 | | | | | 130 | 4.2 |
| CE 14 | IV | none | 100:0 | 58 | 5.1 | 4.06 | 0.20 | 31.7 | 136 | 3.7 |
| 15 | IV | A | 95:5* | 65* | | | | | 139* | 3.6* |
| CE 16 | VI | none | 100:0 | 32 | 3.9 | 3.08 | 0.18 | | | |
| CE17 | VII | none | 100:0 | 8 | 3.7 | 4.31 | 0.13 | 30.5 | 136 | 2.8 |
| 18 | VII | A | 95:5* | 15* | | | | | | |
| CE19 | VIII | none | 100:0 | 116 | 5.6 | 4.79 | 0.37 | 56 | 116 | 3.3 |
| CE 20 | IX | none | 100:0 | 123 | 4.5 | 3.40 | 0.25 | 68.7 | 121 | 3.8 |
| 21 | VI | A | 95:5*** | 41 | 4.8 | 3.90 | 0.26 | | | |

(continued)

| Ex | LLDPE | LDPE | LLDPE/ LDPE | G'(G"=500 Pa) (Pa) | Melt Strength at 100 $s^{-1}$ shear rate, **MS**(100 $s^{-1}$), (190°C, cN) | Melt Strength shear rate derivative, $\delta$(**MS**)/$\delta$(log $\gamma$), (190°C, cN) | Melt Strength pressure derivative, $\delta$(**MS**)/$\delta$(**P**), (190°C, cN/MPa) | Ea (kJ/ mol) | Mw (kDa) classic al | Mw/M n classic al |
|---|---|---|---|---|---|---|---|---|---|---|
| 22 | VI | A | 90:10*** | 47 | 7.4 | 6.50 | 0.42 | | | |

** blend prepared during film extrusion as outlined in Table 5*
*** blend prepared by a single pelletisation on a twin screw APV 19TC25 extruder (screw diameter: 19 mm, L/D= 25) at an output rate of 1.2 kg/h*
**** blend prepared by two successive pelletisations on a single screw Axon 18BX extruder (screw diameter: 18 mm/L/D= 30) at an output rate of 1 kg/h*

It can be seen from Table 6 that the higher melt strengths of the LDPE A used in the novel blends of the present invention would also lead to improvements in film processability, improved bubble stability as well as higher extrusion rates/temperatures as compared to LDPE B (e.g., Ex 4 exhibits higher melt strength at 100 $s^{-1}$ shear rate, **MS**(100 $s^{-1}$), than the Comparatives CE 6, CE 8, CE 14, CE 19 and CE 20).

**TABLE 7 - Film mechanical properties**

| Example | Gloss (%) | Haze (‰) | Dart Drop Impact (g) | Tear MD (g/ 25μm) | Tear TD (g/ 25μm) | MD Shrinkage (%) | Puncture resistance (N.cm/μm) |
|---|---|---|---|---|---|---|---|
| CE1 | 74 | 4.5 | 1550 | 179 | 449 | 7.6 | 7.0 |
| 2 | 75 | 4.3 | 1335 | 203 | 509 | 9.1 | 10.6 |
| 3 | 75 | 4.4 | 950 | 154 | 543 | 10.0 | 7.2 |
| 4 | 70 | 5.0 | 759 | 161 | 579 | 10.5 | 9.3 |
| CE 5 | 51 | 9.4 | 407 | 124 | 594 | 16.1 | 9.6 |
| CE 6 | 74 | 4.9 | 1705 | 201 | 412 | 6.1 | 7.6 |
| CE 7 | 78 | 3.9 | 867 | 233 | 534 | 8.7 | 7.2 |
| CE 8 | 79 | 3.4 | 777 | 160 | 585 | 9.6 | 6.4 |
| CE 9* | 34 | 20.4 | 1356 | 293 | 416 | 4.8 | 7.7 |
| 10 | 73 | 5.0 | 1083 | 220 | 463 | 5.6 | 6.9 |
| CE 11 | 63 | 8.6 | 180 | 227 | 525 | 11.1*** | 5.8 |
| 12 | 75 | 5.5 | 159 | 156 | 539 | 13.9*** | 5.8 |
| 13 | 69 | 6.3 | 152 | 163 | 592 | 20.1*** | 5.7 |
| CE 14 | 73 | 5.5 | 1665 | 181 | 452 | 6.5 | 6.9 |
| 15 | 72 | 5.2 | 1030 | 159 | 548 | 8.1 | 6.9 |
| CE 16 | 79 | 3.2 | 2472 | 218 | 309 | n/a | n/a |
| CE 17** | 44 | 15 | 1540 | 276 | 346 | n/a | n/a |
| 18 | 77 | 4.2 | 1340 | 238 | 392 | 4.5 | 10.3 |
| CE 19 | 60 | 7.9 | 800 | 125 | 469 | 14.6 | 9.2 |
| CE 20 | 39 | 14.9 | 135 | 78 | 589 | 19.8*** | 5.7 |

**: to achieve good bubble stability, frostline height had to be increased up to 650 mm (instead of 430 mm)*
***: extrusion was not possible under reference conditions. Extrusion temperature has been decreased down to 200°C (instead of 220°C)*
****: shrinkage measurements performed at 170°C (instead of 160°C).*

**TABLE 8 - Film tensile properties**

| Example | Secant Modulus (MPa) | | Yield strength (MPa) | | Tensile strength at break (MPa) | | Elongation at break (%) | |
|---|---|---|---|---|---|---|---|---|
| | MD | TD | MD | TD | MD | TD | MD | TD |
| CE1 | 157 | 166 | 10.3 | 11.4 | 72 | 69 | 606 | 688 |
| 2 | 167 | 190 | 10.1 | 10.4 | 65 | 58 | 585 | 670 |
| 3 | 161 | 207 | 9.8 | 9.9 | 57 | 66 | 585 | 700 |
| 4 | 178 | 207 | 10.9 | 10.7 | 64 | 59 | 612 | 694 |
| CE5 | 171 | 216 | 11.0 | 10.4 | 58 | 54 | 647 | 734 |

(continued)

| Example | Secant Modulus (MPa) | | Yield strength (MPa) | | Tensile strength at break (MPa) | | Elongation at break (%) | |
|---|---|---|---|---|---|---|---|---|
| | MD | TD | MD | TD | MD | TD | MD | TD |
| CE6 | 154 | 198 | 9.9 | 10.1 | 63 | 64 | 569 | 671 |
| CE7 | 175 | 199 | 10.8 | 9.5 | 49 | 47 | 530 | 631 |
| CE8 | 180 | 204 | 11.5 | 10.6 | 65 | 57 | 636 | 683 |
| CE 9* | 154 | 157 | 10.7 | 10.9 | 68 | 67 | 631 | 693 |
| 10 | 175 | 185 | 10.2 | 11.5 | 64 | 55 | 669 | 665 |
| CE 11 | 231 | 241 | 13.7 | 12.4 | 59 | 55 | 602 | 722 |
| 12 | 235 | 428 | 14.8 | 10.8 | 41 | 37 | 485 | 556 |
| 13 | 308 | 280 | 15.6 | 10.9 | 57 | 56 | 652 | 734 |
| CE 14 | 179 | 176 | 10.0 | 14.2 | 60 | 52 | 495 | 607 |
| 15 | 170 | 232 | 10.0 | 15.5 | 68 | 40 | 548 | 525 |
| CE 16 | 129 | 139 | 9.1 | 9.8 | 83 | 68 | 512 | 596 |
| CE17** | 152 | 154 | 9.3 | 13.9 | 69 | 63 | 576 | 625 |
| 18 | 164 | 186 | 10.5 | 9.3 | 73 | 60 | 625 | 638 |
| CE 19 | 191 | 211 | 10.9 | 15 | 71 | 63 | 548 | 687 |
| CE 20 | 262 | 278 | 14.1 | 11.4 | 59 | 43 | 549 | 655 |

**: to achieve good bubble stability, frost-line height had to be increased up to 650 mm (instead of 430 mm)*
***: extrusion was not possible under reference conditions. Extrusion temperature has been decreased down to 200°C (instead of 220°C).*

It can be seen from Tables 7 and 8 that the use of the novel blends of the present invention would retain most of the film mechanical and tensile properties. For example, the Dart Drop Impact (DDI) strength of Ex 12 with 5% LDPE A blended to LLDPE III is about 90% that of the original (unblended) LLDPE III (i.e., Comparative CE 11). The selection of the LDPE A also leads to better residual DDI for the blends as compared to those with LDPE B, namely Ex 3 with 5% LDPE A exhibits significantly higher DDI than those of Comparative CE 7 blend with 5% LDPE B in the same LLDPE I. That is, the former (Ex 3) blend retains greater 75% of the DDI of the original (or unblended) polymer as compared to about 50% DDI reduction of the latter (Comparative CE 7).

## Claims

**1.** A polymer blend comprising

(a) 90 - 97% by weight of a copolymer of ethylene and an alpha olefin having from 3 to 10 carbon atoms, said copolymer having

(i) a density in the range 0.910 to 0.940 g $cm^{-3}$,
(ii) a melt index (190°C/2.16 kg), $MI_2$ < 5 g/10min, and
(iii) molecular weight distribution ($M_{w-cc}/M_{n-cc}$, by classical GPC) in the range 2.0 - 5.0, and

(b) from 3 - 10% by weight of a low density polyethylene polymer having

(i) a density from 0.910 to 0.920 g $cm^{-3}$,
(ii) a melt index (190°C/2.16 kg), $MI_2$ in the range 3 to 6 g/10min, and
(iii) a melt elastic modulus G'(G"= 500 Pa) in the range 150-185 Pa at 190°C.

wherein the sum of (a) and (b) is 100%.

2. A polymer blend according to claim 1 wherein the copolymer of component (a) has a molecular weight distribution ($M_{w-cc}/M_{n-cc}$, by classical GPC) in the range 2.- to 4.2 and preferably in the range 3.0 to 4.0.

3. A polymer blend according to claim 1 wherein the copolymer of component (a) has a melt elastic modulus G' (G" = 500Pa) at 190°C in the range 25 to 70 Pa.

4. A polymer blend according to claim 1 wherein the copolymer of component (a) has a melt index ratio $I_{21}/I_2$ less than 35.

5. A polymer blend according to claim 1 wherein the copolymer of component (a) has a flow activation energy (Ea) in the range 28 - 45 kJ/mol.

6. A polymer blend according to claim 1 wherein the copolymer of component (a) has a Long Chain Branching Contraction Factor, $\mathbf{g}_{LCB}$ < 1.

7. A polymer blend according to claim 1 wherein the copolymer of component (a) has a melt strength pressure derivative at 190°C $\delta(MS)/\delta P$ in the range 0.10 to 0.45 wherein MS is the melt strength of the copolymer in cN and P is the extrusion pressure of the copolymer in MPa.

8. A polymer blend according to claim 1 wherein the copolymer of component (a) has a melt strength shear rate derivative at 190°C $\delta(MS)/\delta(\log\gamma)$ in the range 1.5 to 6.0 wherein MS is the melt strength of the copolymer in cN and $\gamma$ is the capillary shear rate of the copolymer in $s^{-1}$.

9. A polymer blend according to claim 1 wherein the low density polyethylene of component (b) has a melt strength at shear rate of 100 $s^{-1}$, **MS**(100 $s^{-1}$) at 190°C of ≥ 10 cN and most preferably in the range 12 - 20 cN.

10. A polymer blend according to claim 1 wherein the low density polyethylene of component (b) has a weight-average molecular weight ratio, $M_{w-LS}/M_{w-calib}$ > 2.5 and more preferably greater than 3.

11. A polymer blend according to any of the preceding claims wherein the copolymer of component (a) is prepared by use of a metallocene catalyst system.

12. A polymer blend according to any of the preceding claims comprising 92 to 97% by weight of component (a) and 3 to 8 % by weight of component (b) and preferably 93 to 96% by weight of component (a) and 4 to 7 % by weight of component (b).

13. A polymer blend according to claim 12 having:

(i) a melt elasticity at 190°C, G'(G"=500 Pa) ≤ 110 Pa, preferably in the range 40 - 80 Pa and more preferably in the range 40 - 70 Pa,
(ii) a melt strength at 100 $s^{-1}$ shear rate at 190°C, **MS**(100 $s^{-1}$) ≥ 5.6 cN, preferably in the range 5.7 - 9.0 cN and more preferably in the range 5.7 - 8.0 cN, and
(iii) a melt Strength shear rate derivative at 190°C, $\delta(\mathbf{MS})/\delta(\log\dot{\gamma})$ ≥ 5 cN, preferably in the range 5.0 - 7.0 cN.

14. A film comprising the polymer blend according to any of claims 1 - 13.

15. A blown film (25 μm) comprising a polymer blend according to claim 14 having a drop Dart Impact strength [ISO 7765-1 (1988) (Method A) of at least 50%, preferably in the range 60 - 95% and more preferably in the range 70 - 90% more than a film comprising the copolymer of component (a) of the blend alone.

**Patentansprüche**

1. Polymermischung, umfassend

(a) 90 - 97 Gew.-% eines Copolymers aus Ethylen und einem alpha-Olefin mit 3 bis 10 Kohlenstoffatomen, wobei das Copolymer

(i) eine Dichte im Bereich von 0,910 bis 0, 940 g $cm^{-3}$,
(ii) einen Schmelzindex (190°C/2,16 kg), $MI_2$ < 5 g/10 min, und
(iii) eine Molekulargewichtsverteilung ($M_{w-cc}/M_{n-cc}$, mittels herkömmlicher GPC) im Bereich von 2,0 - 5,0 aufweist, und

(b) 3 - 10 Gew.-% eines Polyethylenpolymers niedriger Dichte mit

(i) einer Dichte von 0,910 bis 0,920 g $cm^{-3}$,
(ii) einem Schmelzindex (190°C/2,16 kg), $MI_2$ im Bereich von 3 bis 6 g/10 min, und
(iii) einem Schmelzelastizitätsmodul G'(G"= 500 Pa) im Bereich von 150-185 Pa bei 190 °C,

wobei die Summe von (a) und (b) 100 % ist.

**2.** Polymermischung nach Anspruch 1, wobei das Copolymer der Komponente (a) eine Molekulargewichtsverteilung ($M_{w-cc}/M_{n-cc}$, mittels herkömmlicher GPC) im Bereich von 2,- bis 4,2 und vorzugsweise im Bereich von 3,0 bis 4,0 aufweist.

**3.** Polymermischung nach Anspruch 1, wobei das Copolymer der Komponente (a) einen Schmelzelastizitätsmodul G' (G" = 500 Pa) bei 190°C im Bereich von 25 bis 70 Pa aufweist.

**4.** Polymermischung nach Anspruch 1, wobei das Copolymer der Komponente (a) ein Schmelzindexverhältnis $I_{21}/I_2$ kleiner 35 aufweist.

**5.** Polymermischung nach Anspruch 1, wobei das Copolymer der Komponente (a) eine Fluss-Aktivierungsenergie (Ea) im Bereich von 28 - 45 kJ/mol aufweist.

**6.** Polymermischung nach Anspruch 1, wobei das Copolymer der Komponente (a) einen Langkettenverzweigungs-Kontraktionsfaktor $g_{LCB}$ < 1 aufweist.

**7.** Polymermischung nach Anspruch 1, wobei das Copolymer der Komponente (a) ein Schmelzfestigkeits-Druckderivat bei 190°C $\delta(MS)/\delta P$ im Bereich von 0,10 bis 0,45 aufweist, wobei MS die Schmelzfestigkeit des Copolymers in cN ist und P der Extrusionsdruck des Copolymers in MPa ist.

**8.** Polymermischung nach Anspruch 1, wobei das Copolymer der Komponente (a) ein Schmelzfestigkeits-Scherraten-Derivat bei 190°C $\delta(MS)/\delta(\log\gamma)$ im Bereich von 1,5 bis 6,0 aufweist, wobei MS die Schmelzfestigkeit des Copolymers in cN ist und $\gamma$ die Kapillarscherrate des Copolymers in $s^{-1}$ ist.

**9.** Polymermischung nach Anspruch 1, wobei das Polyethylen niedriger Dichte der Komponente (b) eine Schmelzfestigkeit bei einer Scherrate von 100 $s^{-1}$, MS(100 $s^{-1}$) bei 190°C von ≥ 10 cN und am meisten bevorzugt im Bereich von 12 - 20 cN aufweist.

**10.** Polymermischung nach Anspruch 1, wobei das Polyethylen niedriger Dichte der Komponente (b) ein Verhältnis des Gewichtsmittels des Molekulargewichts, $M_{w\text{-}LS}/M_{w\text{-}calib}$ > 2,5 und bevorzugter größer 3 aufweist.

**11.** Polymermischung nach einem der vorhergehenden Ansprüche, wobei das Copolymer der Komponente (a) unter Verwendung eines Metallocen-Katalysatorsystems hergestellt wird.

**12.** Polymermischung nach einem der vorhergehenden Ansprüche, umfassend 92 bis 97 Gew.-% der Komponente (a) und 3 bis 8 Gew.-% der Komponente (b) und vorzugsweise 93 bis 96 Gew.-% der Komponente (a) und 4 bis 7 Gew.-% der Komponente (b) .

**13.** Polymermischung nach Anspruch 12 mit:

(i) einer Schmelzelastizität bei 190°C, G'(G"=500 Pa) ≤ 110 Pa, vorzugsweise im Bereich von 40 - 80 Pa und bevorzugter im Bereich von 40 - 70 Pa,
(ii) einer Schmelzfestigkeit bei 100 $s^{-1}$ Scherrate bei 190°C, MS (100 $s^{-1}$) ≥ 5,6 cN, vorzugsweise im Bereich von 5,7 - 9.0 cN und bevorzugter im Bereich von 5,7 - 8,0 cN und
(iii) ein Schmelzfestigkeits-Scherratenderivat bei 190 °C, $\delta(MS)/\delta(\log\gamma)$≥ 5 cN, vorzugsweise im Bereich von

5,0 - 7,0 cN.

14. Film, umfassend die Polymermischung nach einem der Ansprüche 1 - 13.

15. Blasfolie (25 μm), umfassend eine Polymermischung nach Anspruch 14 mit einer mittels Schlaghammerverfahren bestimmten Schlagfestigkeit [ISO 7765-1 (1988) (Methode A) die mindestens 50 %, vorzugsweise im Bereich von 60 - 95 % und bevorzugt im Bereich von 70 - 90 % höher ist als die einer Folie, die das Copolymer der Komponente (a) der Mischung allein umfasst.

**Revendications**

1. Mélange de polymères contenant :

(a) 90 à 97 % en poids d'un copolymère d'éthylène et d'une α-oléfine ayant 3 à 10 atomes de carbone, ledit copolymère ayant :

(i) une densité dans la gamme de 0,910 à 0,940 g.cm$^{-3}$,
(ii) un indice de fluidité (190°C/2,16 kg), $MI_2$ < 5 g/10 min, et
(iii) une distribution de poids moléculaire ($M_{w-cc}/M_{n-cc}$ par GPC classique) dans la gamme de 2,0 à 5, 0, et

(b) de 3 à 10 % en poids d'un polymère polyéthylène basse densité ayant :

(i) une densité dans la gamme de 0,910 à 0, 920 g.cm$^{-3}$,
(ii) un indice de fluidité (190°C/2,16 kg), $MI_2$ dans la gamme de 3 à 6 g/10 min, et
(iii) un module d'élasticité en phase fondue G' (G" = 500 Pa) dans la gamme de 150 à 185 Pa à 190°C,

la somme de (a) et de (b) étant 100 %.

2. Mélange de polymères selon la revendication 1, dans lequel le copolymère de composant (a) a une distribution de poids moléculaire ($M_{w-cc}/M_{n-cc}$ par GPC classique) dans la gamme de 2,0 à 4,2 et de préférence dans la gamme de 3,0 à 4,0.

3. Mélange de polymères selon la revendication 1, dans lequel le copolymère de composant (a) a un module d'élasticité en phase fondue G' (G" = 500 Pa) à 190°C dans la gamme de 25 à 70 Pa.

4. Mélange de polymères selon la revendication 1, dans lequel le copolymère de composant (a) a un rapport d'indices de fluidité $I_{21}/I_2$ inférieur à 35.

5. Mélange de polymères selon la revendication 1, dans lequel le copolymère de composant (a) a une énergie d'activation d'écoulement (Ea) dans la gamme de 28 à 45 kJ/mol.

6. Mélange de polymères selon la revendication 1, dans lequel le copolymère de composant (a) a un facteur de contraction par ramifications à longues chaînes $g_{LCB}$ < 1.

7. Mélange de polymères selon la revendication 1, dans lequel le copolymère de composant (a) a une dérivée de la pression de résistance à l'état fondu à 190°C $\delta(MS)/\delta P$ dans la gamme de 0,10 à 0,45 où MS est la résistance à l'état fondu du copolymère, en cN, et où P est la pression d'extrusion du copolymère, en MPa.

8. Mélange de polymères selon la revendication 1, dans lequel le copolymère de composant (a) a une dérivée du taux de cisaillement à l'état fondu à 190°C $\delta(MS)/\delta(\log \gamma)$ dans la gamme de 1,5 à 6,0, où MS est la résistance à l'état fondu du copolymère, en cN, et où γ est le taux de cisaillement capillaire du copolymère, en s$^{-1}$.

9. Mélange de polymères selon la revendication 1, dans lequel le polyéthylène basse densité du composant (b) a une résistance à l'état fondu à un taux de cisaillement de 100 s$^{-1}$, à 190°C, MS(100 s$^{-1}$) ≥ 10 cN et plus préférentiellement dans la gamme de 12 à 20 cN.

10. Mélange de polymères selon la revendication 1, dans lequel le polyéthylène basse densité du composant (b) a un

rapport poids/poids moléculaire moyen $M_{w-LS}/M_{w-calib}$ > 2,5 et plus préférentiellement supérieur à 3.

**11.** Mélange de polymères selon l'une quelconque des revendications précédentes, dans lequel le copolymère du composant (a) est préparé en utilisant un système catalytique métallocène.

**12.** Mélange de polymères selon l'une quelconque des revendications précédentes, contenant 92 à 97 % en poids de composant (a) et 3 à 8 % en poids de composant (b) et de préférence 93 à 96 % en poids de composant (a) et 4 à 7 % en poids de composant (b).

**13.** Mélange de polymères selon la revendication 12, ayant :

(i) une élasticité à l'état fondu à 190°C, G' (G" = 500 Pa) $\leq$ 110 Pa, de préférence dans la gamme de 40 à 80 Pa, et plus préférentiellement dans la gamme de 40 à 70 Pa,
(ii) une résistance à l'état fondu a une résistance à l'état fondu à un taux de cisaillement de 100 $s^{-1}$, à 190°C, MS(100 $s^{-1}$) $\geq$ 5,6 cN, de préférence dans la gamme de 5,7 à 9,0 cN et plus préférentiellement dans la gamme de 5,7 à 8,0 cN, et
(iii) une dérivée du taux de cisaillement à l'état fondu à 190°C, $\delta(MS)/\delta(\log \dot{\gamma}) \geq 5$ cN, de préférence dans la gamme de 5,0 à 7,0 cN.

**14.** Film contenant le mélange de polymères selon l'une quelconque des revendications 1 à 13.

**15.** Film soufflé (25 $\mu$m) contenant un mélange de polymères selon la revendication 14 ayant une résistance à l'impact de poinçon [ISO 7765-1 (1988) (procédé A)] d'au moins 50 %, de préférence dans la gamme de 60 à 95 % et plus préférentiellement dans la gamme de 70 à 90 % supérieure à un film contenant seulement le copolymère de composant (a) du mélange.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9744371 A
- WO 0068285 A
- WO 06085051 A
- WO 08074689 A
- WO 2009109367 A
- WO 05001933 A
- EP 1081166 A
- WO 0009594 A
- US 20020143123 A1
- EP 0095253 A1
- EP 1777238 B
- EP 416815 A
- EP 418044 A
- EP 420436 A
- EP 551277 A
- WO 9500526 A
- WO 9827119 A
- WO 04020487 A
- WO 05019275 A
- EP 89691 A
- EP 699213 A
- WO 2010000557 A


### Non-patent literature cited in the description


- **CLAUS GABRIEL ; ESA KOKKO ; BARBRO LÖFGREN ; JUKKA SEPPÄLÄ ; HELMUT MÜNSTEDT.** Analytical and Rheological Characterization of Long-Chain Branched Metallocene-catalyzed Ethylene Homopolymers. *Polymer,* 2002, vol. 43, 6383-6390
- **T. SUN ; P. BRANT ; R.R. CHANCE ; W.W. GRAESSLEY.** Effect of Short Chain Branching on the Coil Dimensions of Polyolefins in Dilute Solution. *Macromolecules,* 2001, vol. 34, 6812-6820
- **P. TACKX ; J.C.J.F TACX.** *Polymer,* 1998, vol. 39, 3109-3113
- **P. CHEUNG ; ST. BALKE ; TH. MOUREY.** Data Interpretation For Coupled Molecular-Weight Sensitive Detectors In SEC - Interdetector Transport Time. *Journal Of Liquid Chromatography,* 1992, vol. 15 (1), 39-69
- **B.H.M. ZIMM ; W.H. STOCKMAYER.** The Dimensions of Molecules Containing Branching and Rings. *J. Chem. Phys.,* 1949, vol. 17 (12), 1301-1314
- **YOULU YU et al.** *Polymer,* 2005, vol. 46, 5165-5182